# EUROPEAN PATENT SPECIFICATION

(11) **EP 3 878 573 B1**
(45) Date of publication and mention of the grant of the patent: **12.07.2023**
(21) Application number: 19882448.4
(22) Date of filing: 30.10.2019
(51) Int. Cl.: B22D 11/126, B23D 79/02, B23D 79/06, B22D 31/00

(54) **MELTED BURR REMOVAL DEVICE FOR CAST STEEL PARTS OR ROLLED STEEL PARTS, AND METHOD FOR MANUFACTURING CAST STEEL PARTS OR ROLLED STEEL PARTS**
VORRICHTUNG ZUM ENTGRATEN FÜR STAHLGUSSTEILE ODER STAHLWALZTEILE UND VERFAHREN ZUR HERSTELLUNG VON GEGOSSENEN STAHLTEILEN ODER WALZSTAHLTEILEN
DISPOSITIF D'ÉLIMINATION DE BAVURES FONDUES DESTINÉ À DES PIÈCES EN ACIER COULÉ OU À DES PIÈCES EN ACIER LAMINÉ, ET PROCÉDÉ DE FABRICATION DE PIÈCES EN ACIER COULÉ OU DE PIÈCES EN ACIER LAMINÉ

(30) Priority: 05.11.2018 JP 2018207860
(43) Date of publication of application: 15.09.2021
(73) Proprietor: JFE Steel Corporation, Tokyo 100-0011 (JP)
(72) Inventor: MIYAHARA Hiroshi, Tokyo 100-0011 (JP); MINEGUCHI Tomoyuki, Tokyo 100-0011 (JP); IWAKI Yozo, Tokyo 100-0011 (JP); MITSUZONO Masayuki, Tokyo 100-0011 (JP)
(74) Representative: Haseltine Lake Kempner LLP
(86) International application number: PCT/JP2019/042459
(87) International publication number: WO 2020/095773

(56) References cited:
- WO-A1-90/06195
- JP-A- H10 263 773
- JP-A- 2009 214 185
- JP-A- 2009 214 185
- JP-A- 2010 079 471
- JP-A- 2010 079 471
- JP-A- 2013 031 537
- US-A- 4 221 514
- US-A1- 2010 226 727

## Description

### Technical Field

The present invention relates to a burr removal device for removing burrs formed by fusing cast steel parts or rolled steel parts. The present invention also relates to a method for manufacturing cast steel parts or rolled steel parts by removing burrs by using the burr removal device.

### Background Art

Cast steel parts formed by continuous casting and rolled steel sheets formed by hot rolling are generally cut into predetermined lengths by using a gas cutting machine having a high cutting efficiency. The gas cutting machine cuts the cast steel parts or the rolled steel sheets using oxygen gas or mixed gas containing oxygen gas and fuel gas (fusion cutting). Accordingly, burrs containing melted iron (hereinafter also referred to simply as "burrs") remain at the bottom of cut surfaces formed by the gas cutting machine. When steel slabs are heated without removing the burrs and then hot rolled into steel sheets, surface defects called "scabs" are formed at the leading and trailing ends of the steel sheets manufactured by hot rolling. This leads to a reduction in the yield of the steel sheets. Accordingly, various devices for removing the burrs have been proposed.

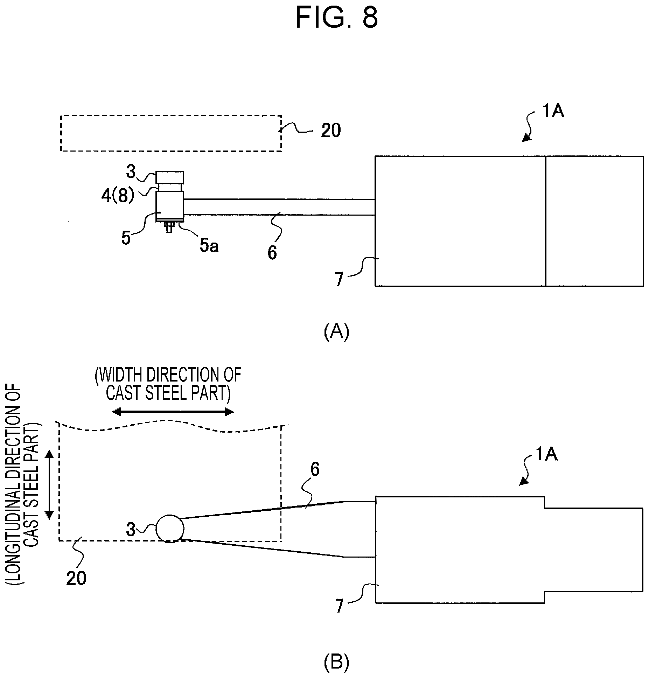

For example, Patent Literature 1 proposes a swing-scraping burr removal device including a disc-shaped deburring blade that scrapes off melted burrs and an arm that swings the deburring blade in front-back and left-right directions. Fig. 8 is a schematic diagram illustrating the swing-scraping burr removal device disclosed in Patent Literature 1. Fig. 8(A) is a side view, and Fig. 8(B) is a plan view. Fig. 8 illustrates a cast steel part 20 (slab) as an object from which burrs are to be removed.

As illustrated in Fig. 8, the burr removal device 1A disclosed in Patent Literature 1 includes a disc-shaped deburring blade 3 that removes burrs; a blade seat 4 that serves as a seat for the deburring blade 3; a blade seat support base 5 that supports the blade seat 4; an arm 6 having the blade seat support base 5 at a distal end thereof; and an arm vibration elevation drive unit 7. The arm vibration elevation drive unit 7 is a device for moving the arm 6 upward and downward, causing the arm 6 to extend and contract, and vibrating the arm 6 in front-back and/or left-right directions (directions along a plane in contact with a lower edge line of a fusion-cut surface of a cast steel part or a rolled steel part). When the burr removal device 1A is applied to a continuous casting facility, the arm vibration elevation drive unit 7 is generally installed adjacent to a cast part conveyance line, and the arm 6 is generally disposed between conveying rollers of the cast part conveyance line.

A method for removing burrs by using the swing-scraping burr removal device 1A will now be described. First, the cast steel part 20 or the rolled steel sheet is disposed such that an end surface thereof is positioned directly above the deburring blade 3. Next, the arm vibration elevation drive unit 7 causes the deburring blade 3 to extend/contract and move upward so that the deburring blade 3 comes into contact with a lower surface of the cast steel part 20 or the rolled steel sheet. After that, the deburring blade 3 that is in contact with the lower surface of the cast steel part 20 or the rolled steel sheet is vibrated along the plane in contact with the lower edge line of the fusion-cut surface of the cast steel part or the rolled steel part to forcefully scrape off the burrs.

As the number of times the deburring blade 3 is used increases, the deburring blade 3 wears and it becomes more difficult to remove the burrs due to, for example, rounded edges. Therefore, the deburring blade 3 needs to be replaced after being used a predetermined number of times.

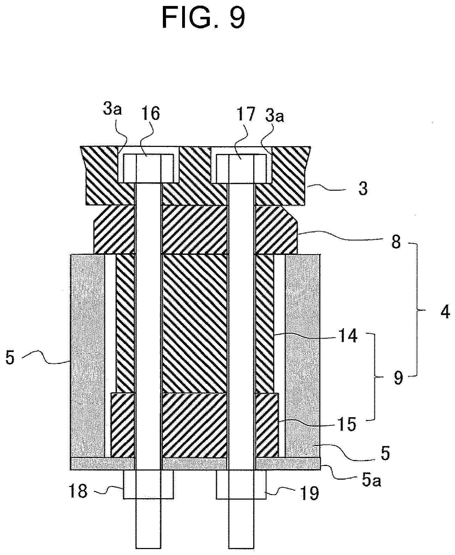

Fig. 9 illustrates the structure of a distal end portion of the arm of the burr removal device 1A disclosed in Patent Literature 1. The deburring blade 3 has recesses 3a in an upper surface thereof, and a bolt 16 and a bolt 17 are disposed in the recesses 3a. The bolt 16 and the bolt 17 extend through the deburring blade 3 and the blade seat 4, and also extend through bolt holes in a bottom plate 5a of the blade seat support base 5. The bolt 16 and the bolt 17, which extend through the bottom plate 5a, are fastened to a nut 18 and a nut 19, respectively, on a lower surface of the bottom plate 5a. The blade seat 4 is an assembly including a base seat 8, a fitting member 14, and a fitting member 15. The fitting member 14 and the fitting member 15 form a fitting unit 9 that is fitted to the blade seat support base 5.

Thus, the deburring blade 3 and the blade seat 4 are fixed to the blade seat support base 5 by the bolts 16 and 17 and the nuts 18 and 19. Therefore, to replace the deburring blade 3, it is necessary to loosen and remove the nuts 18 and 19 and pull out the bolts 16 and 17.

When the deburring blade 3 is used to remove burrs from a cast steel part immediately after the cast steel part is formed by a continuous casting machine, the temperature of the deburring blade 3 may exceed, for example, about 400°C. Therefore, to replace the deburring blade 3, it is necessary to cool the deburring blade 3 (about 10 minutes), remove the bolts (about 25 minutes), remove the deburring blade 3 and attach another deburring blade 3 (about 5 minutes), and fasten the bolts (about 5 minutes). Thus, the replacement takes about 45 minutes. During this time, the casting operation of the continuous casting machine needs to be stopped. In other words, the productivity of the continuous casting machine is reduced.

The replacement of the deburring blade 3 is carried out by removing the bolts 16 and 17 and assembling the deburring blade 3 and the blade seat 4 on-site at the location between the conveying rollers of the cast part conveyance line. Therefore, the work environment is not favorable. For example, the work space is small, and the ambient temperature is high because surrounding equipment is heated by the high-temperature cast part. In addition, since the deburring blade 3 is manually replaced, there is a risk of an accident such as pinching of a hand or a finger.

Patent Literature 2 discloses a brush for removing burr, the brush having a brush head magnetically attachable to a brush holder

Patent Literature 3 discloses a deburrer assembly for removing burrs from the surface of castings, the deburrer assembly having a cylindrical roll body and multiple hammers arranged in sets and projecting radially of the roll body.

Patent Literature 4 discloses a tool for removing burrs which detects whether the depths of holes made on a work are prescribed depths or not.

Patent Literature 5 discloses moving a trimming tool along the contour of a workpiece while imparting linear or rotary cutting motion to the tool, detecting the deflection of the tool as it follows the contour, and using signals representative of the deflection detection to control the contour-following tool-motion.

Patent Literature 6 discloses a deburring system having a robot with a multi-shaft arm on which a cutting blade unit is detachably supported.

### Citation List

### Patent Literature

PTL 1: West German Patent No. 3515111

### Summary of Invention

PTL 2: JP 2009 214185 A
PTL 3: WO 90/06195 A1
PTL 4: US 2010/0226727 A1
PTL 5: US 4,221,514 A
PTL 6: JP 2010 079471 A

### Technical Problem

The present invention has been made in light of the above-described circumstances, and an object of the present invention is to provide a burr removal device for cast steel parts or rolled steel parts with which it is not necessary to remove the bolt 16 and the bolt 17 and assemble the deburring blade 3 and the blade seat 4 on-site at the location between the conveying rollers, and with which the deburring blade 3 can be replaced in a short time. Another object of the present invention is to provide a method for manufacturing cast steel parts or rolled steel parts by removing burrs by using the burr removal device.

### Solution to Problem

The scope of the present invention is defined by independent claims 1 and 3, and further embodiment of the invention are specified in dependent claim 3.

### Advantageous Effects of Invention It

According to the present invention, the deburring blade and the blade seat are integrated together, and the fitting unit of the blade seat can be inserted into and removed from the hollow space in the blade seat support base. Accordingly, the deburring blade and the blade seat can be assembled off-line. In addition, the deburring blade can be disposed at a predetermined position simply by inserting the deburring blade and the blade seat that are integrated together into the hollow space in the blade seat support base.

In addition, according to the present invention, replacement of the deburring blade is completed by removing the deburring blade and the blade seat that are integrated together and that have been used from the hollow space in the blade seat support base and then inserting another deburring blade and another blade seat that are assembled in advance into the hollow space in the blade seat support base. Thus, the deburring blade can be replaced in a short time.

### Brief Description of Drawings

[Fig. 1] Fig. 1 is a schematic diagram illustrating a burr removal device for cast steel parts or rolled steel parts according to the present invention, wherein Fig. 1(A) is a side view and Fig. 1(B) is a plan view.
[Fig. 2] Fig. 2 is a schematic diagram illustrating the schematic structure of a blade unit according to a first embodiment.
[Fig. 3] Fig. 3 is a schematic diagram illustrating the state in which the blade unit according to the first embodiment is inserted in a hollow space in a blade seat support base.
[Fig. 4] Fig. 4 is a schematic perspective view of a blade unit according to a second embodiment.
[Fig. 5] Fig. 5 is a schematic diagram illustrating the state in which the blade unit according to the second embodiment is inserted in the hollow space in the blade seat support base.
[Fig. 6] Fig. 6 is a schematic diagram illustrating an optimum method for carrying the blade units according to the first embodiment and the second embodiment.
[Fig. 7] Fig. 7 is a schematic diagram illustrating the optimum method for carrying the blade units according to the first embodiment and the second embodiment.
[Fig. 8] Fig. 8 is a schematic diagram illustrating a swing-scraping burr removal device disclosed in Patent Literature 1, wherein Fig. 8(A) is a side view and Fig. 8(B) is a plan view.
[Fig. 9] Fig. 9 is a schematic diagram illustrating the structure of a distal end portion of an arm of the burr removal device disclosed in Patent Literature 1. Description of Embodiments

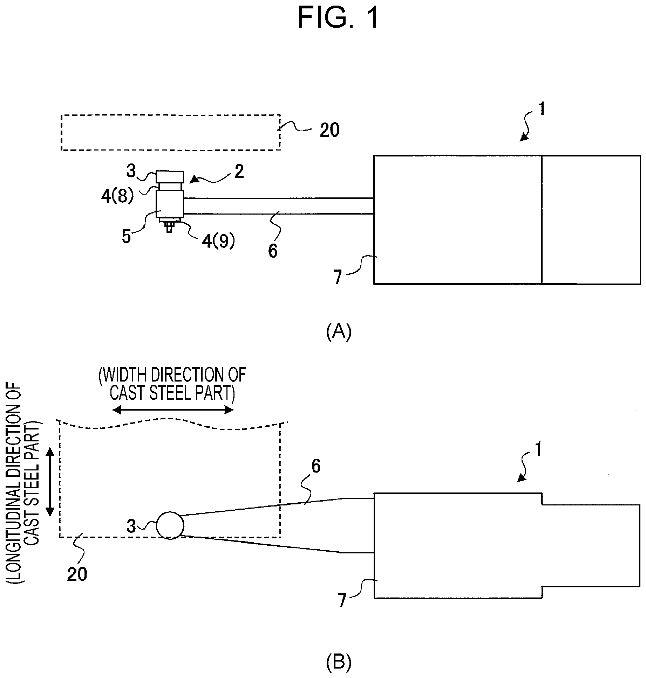

The present invention will now be described with reference to the accompanying drawings. Fig. 1 is a schematic diagram illustrating a burr removal device for cast steel parts or rolled steel parts according to the present invention, wherein Fig. 1(A) is a side view and Fig. 1(B) is a plan view. Fig. 1 illustrates a cast steel part 20 (slab) as an object from which burrs are to be removed.

A burr removal device 1 for cast steel parts or rolled steel parts according to the present invention basically has a structure similar to that of the swing-scraping burr removal device 1A according to Patent Literature 1 illustrated in Figs. 8 and 9, but differs from the burr removal device 1A in that a blade seat support base 5 thereof has a hollow cylindrical shape. In other words, the blade seat support base 5 does not include the bottom plate 5a illustrated in Fig. 9. The burr removal device 1 according to the present invention includes a disc-shaped deburring blade 3 and a blade seat 4 that are integrated together. A fitting unit 9, which is a lower portion of the blade seat 4, is inserted into a hollow space in the blade seat support base 5. Thus, the deburring blade 3 is mounted on a distal end portion of an arm 6 at a predetermined position.

As illustrated in Fig. 1, the burr removal device 1 for cast steel parts or rolled steel parts according to the present invention includes the disc-shaped deburring blade 3 that removes burrs; the blade seat 4 that is disposed in contact with a lower surface of the deburring blade 3 and that serves as a seat for the deburring blade 3; the blade seat support base 5 that supports the blade seat 4; the arm 6 having the blade seat support base 5 at the distal end thereof; and an arm vibration elevation drive unit 7 that moves the arm 6 upward and downward, causes the arm 6 to extend and contract, and vibrates the arm 6 in front-back and/or left-right directions, that is, along a plane in contact with a lower edge line of a fusion-cut surface of the cast steel part 20 or a rolled steel sheet. In this specification, the assembly including the deburring blade 3 and the blade seat 4 that are integrated together is referred to also as a "blade unit". In Fig. 1, reference sign 2 denotes the "blade unit".

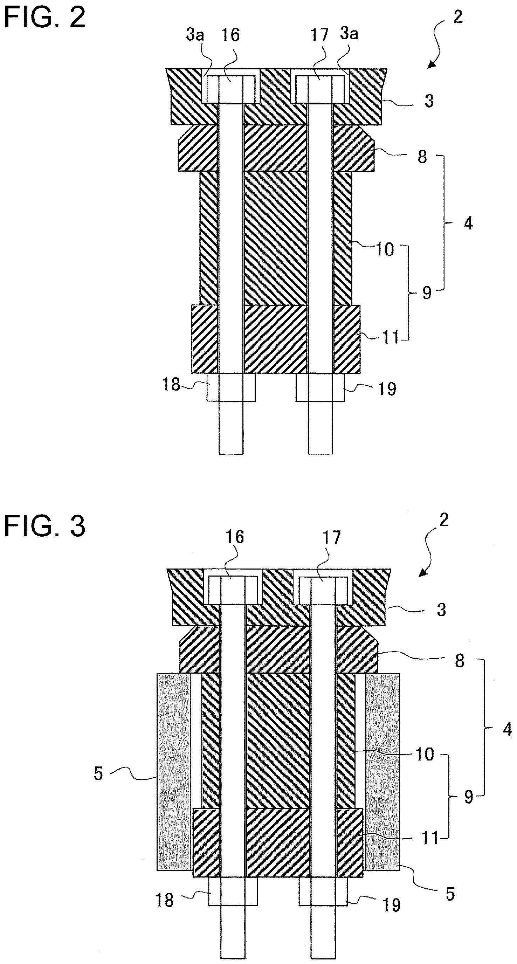

Fig. 2 illustrates the schematic structure of the blade unit 2 according to the first embodiment of the present invention. The blade unit 2 illustrated in Fig. 2 is structured such that the blade seat 4 is an assembly of three members, which are a base seat 8, a first fitting member 10, and a second fitting member 11. The first fitting member 10 and the second fitting member 11 of the blade seat 4 form a fitting unit 9 that is inserted in the hollow space in the blade seat support base 5. The blade unit 2 is structured such that the second fitting member 11, the first fitting member 10, the base seat 8, and the deburring blade 3 are stacked in that order in the direction from bottom to top. A bolt 16 and a bolt 17, which extend through the deburring blade 3, the base seat 8, the first fitting member 10, and the second fitting member 11, are disposed in recesses 3a formed in an upper surface of the deburring blade 3. A nut 18 and a nut 19 are fastened to the bolt 16 and the bolt 17, respectively, on a lower surface of the second fitting member 11. Thus, the deburring blade 3 and the blade seat 4 including the fitting unit 9 are fastened together by the bolts 16 and 17 and the nuts 18 and 19, and are thereby integrated together to form the blade unit 2. The first fitting member 10 and the second fitting member 11 have cylindrical shapes.

Fig. 3 is a schematic diagram illustrating the state in which the blade unit 2 is inserted in the hollow space in the blade seat support base 5. The base seat 8 included in the blade seat 4 illustrated in Fig. 3 has a circular bottom surface, and the diameter of the bottom surface of the base seat 8 is greater than the inside diameter of the blade seat support base 5 (diameter of the hollow space). Therefore, the blade unit 2 is mounted on the blade seat support base 5 in a state such that the base seat 8 is placed on the upper edge of the blade seat support base 5. In this state, the fitting unit 9 of the blade seat 4 is inserted in the hollow space in the blade seat support base 5.

The diameter of the first fitting member 10 and the diameter of the second fitting member 11 are less than the inside diameter of the blade seat support base 5 (diameter of the hollow space). Therefore, the first fitting member 10 and the second fitting member 11 can be easily inserted into the hollow space in the blade seat support base 5, and can be easily removed from the hollow space in the blade seat support base 5. In other words, the blade unit 2 can be easily inserted into and removed from the hollow space in the blade seat support base 5.

When the differences between the diameter of the first fitting member 10 and the inside diameter of the blade seat support base 5 (diameter of the hollow space) and between the diameter of the second fitting member 11 and the inside diameter of the blade seat support base 5 (diameter of the hollow space) are small, the fitting unit 9 cannot be easily removed from the hollow space in the blade seat support base 5 due to thermal expansion during operation. To prevent this, the differences between the diameter of the first fitting member 10 and the inside diameter of the blade seat support base 5 (diameter of the hollow space) and between the diameter of the second fitting member 11 and the inside diameter of the blade seat support base 5 (diameter of the hollow space) are preferably greater than or equal to 7 mm. In other words, the diameter of the first fitting member 10 and the diameter of the second fitting member 11 are preferably set in accordance with the inside diameter of the blade seat support base 5 (diameter of the hollow space) so that the above-described differences are greater than or equal to 7 mm. The diameter of the first fitting member 10 and the diameter of the second fitting member 11 are, of course, less than the inside diameter of the blade seat support base 5 (diameter of the hollow space).

When the diameter of the first fitting member 10 and the diameter of the second fitting member 11 are too small relative to the inside diameter of the blade seat support base 5 (diameter of the hollow space), the deburring blade 3 may move in the hollow space in the blade seat support base 5 due to reaction force generated in response to removal of the burrs, and stability of the operation of removing the burrs may be reduced. Therefore, the difference between the inside diameter of the blade seat support base 5 (diameter of the hollow space) and at least one of the diameter of the first fitting member 10 and the diameter of the second fitting member 11 is preferably less than or equal to 15 mm. In other words, the diameter of the first fitting member 10 and the diameter of the second fitting member 11 are preferably set in accordance with the inside diameter of the blade seat support base 5 (diameter of the hollow space) so that the above-described difference is less than or equal to 15 mm. The inventors of the present invention have confirmed that, when the difference between the inside diameter of the blade seat support base 5 (diameter of the hollow space) and at least one of the diameter of the first fitting member 10 and the diameter of the second fitting member 11 is less than or equal to 15 mm, the deburring blade 3 removes the burrs while moving substantially in synchronization with the movement of the arm 6, and stability of the operation of removing the burrs can be improved.

When the base seat 8 does not have a circular cross section, the base seat 8 may be shaped such that the maximum outer dimension of at least a portion thereof is greater than the inside diameter of the blade seat support base 5, so that the base seat 8 does not pass through the hollow space in the blade seat support base 5 and is mounted on the blade seat support base 5.

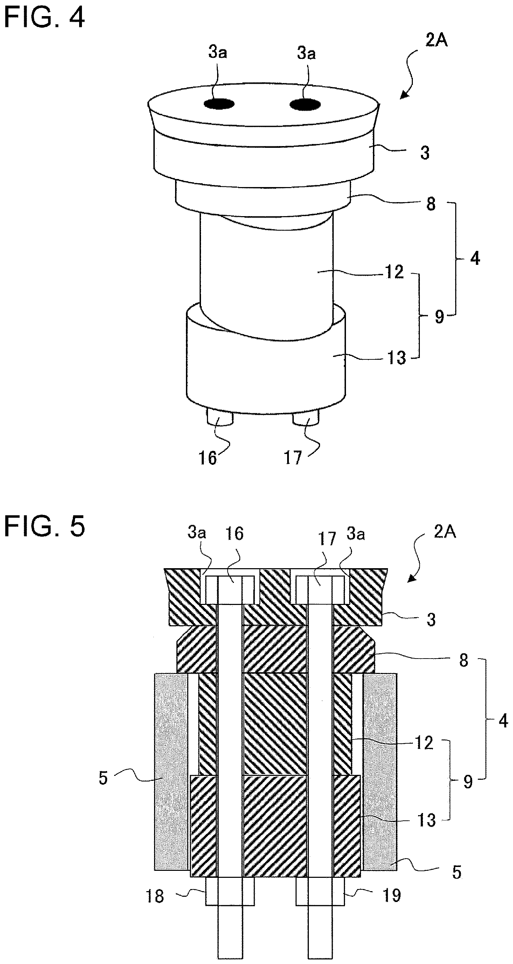

The structure of a blade unit 2A according to a second embodiment of the present invention will now be described with reference to Figs. 4 and 5. Fig. 4 is a schematic perspective view of the blade unit 2A according to the second embodiment, and Fig. 5 is a schematic diagram illustrating the state in which the blade unit 2A according to the second embodiment is inserted in the hollow space in the blade seat support base 5.

The difference between the blade unit 2A according to the second embodiment and the blade unit 2 according to first embodiment will now be described. The blade unit 2A includes a third fitting member 12 instead of the first fitting member 10 of the blade unit 2 and a fourth fitting member 13 instead of the second fitting member 11 of the blade unit 2. In other words, the blade unit 2A of the second embodiment is structured such that the third fitting member 12 and the fourth fitting member 13 form a fitting unit 9.

The third fitting member 12 and the fourth fitting member 13 are elliptic cylindrical members having elliptical horizontal cross sections. The third fitting member 12 and the fourth fitting member 13 are oriented so that the major axis of the elliptical cross section of the third fitting member 12 and the major axis of the elliptical cross section of the fourth fitting member 13 are orthogonal to each other. In this case, the lengths of the major axes of the third fitting member 12 and the fourth fitting member 13 are preferably set as follows: either the difference between the length of the major axis of the elliptical cross section of the third fitting member 12 and the inside diameter of the blade seat support base 5 (diameter of the hollow space) is greater than or equal to 7 mm and less than or equal to 15 mm, or the difference between the length of the major axis of the elliptical cross section of the fourth fitting member 13 and the inside diameter of the blade seat support base 5 (diameter of the hollow space) is greater than or equal to 7 mm and less than or equal to 15 mm. The length of the major axis of the elliptical cross section of the third fitting member 12 and the length of the major axis of the elliptical cross section of the fourth fitting member 13 are, of course, less than the inside diameter of the blade seat support base 5 (diameter of the hollow space).

Other structures of the blade unit 2A, which are the same as those of the blade unit 2 according to the first embodiment illustrated in Fig. 2, are denoted by the same reference signs as those of the blade unit 2 and description thereof is thus omitted.

A method for removing burrs by using the swing-scraping burr removal device 1 according to the present invention will now be described. First, the cast steel part 20 or the rolled steel sheet is disposed such that an end surface thereof is positioned directly above the deburring blade 3. Next, the arm vibration elevation drive unit 7 causes the deburring blade 3 to extend/contract and move upward so that the deburring blade 3 comes into contact with a lower surface of the cast steel part 20 or the rolled steel sheet. After that, the deburring blade 3 that is in contact with the lower surface of the cast steel part 20 or the rolled steel sheet is vibrated in the front-back and/or left-right directions to forcefully scrape off the burrs. In other words, the deburring blade 3 is vibrated along the plane in contact with the lower edge line of the fusion-cut surface of the cast steel part 20 or the rolled steel sheet to forcefully scrape off the burrs.

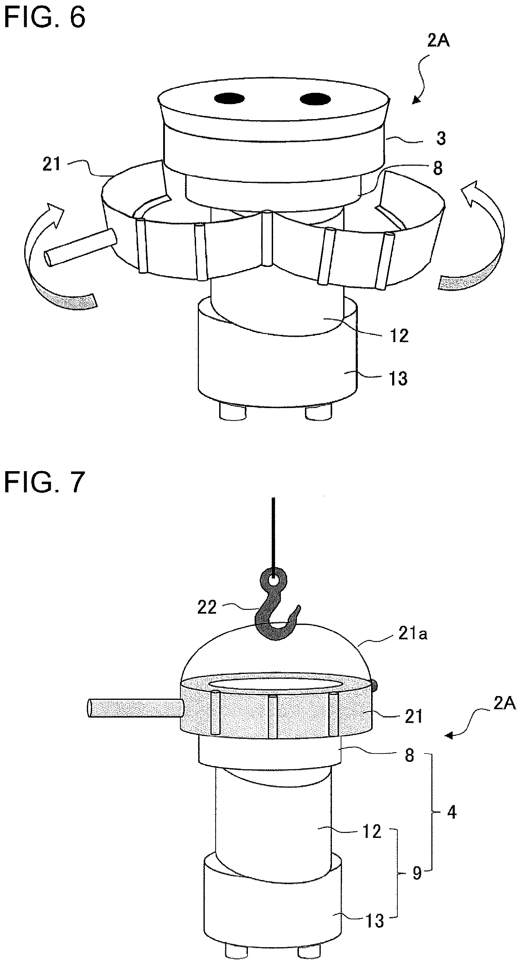

Figs. 6 and 7 illustrate an optimum method for carrying the blade unit 2 or the blade unit 2A. Figs. 6 and 7 illustrate an example in which the blade unit 2A is carried. As illustrated in Fig. 6, a lower end portion of a lifting tool 21, which has an open end, is engaged with the lower end of the deburring blade 3 of the blade unit 2 or the blade unit 2A, and then the open end of the lifting tool 21 is closed so that the lifting tool 21 has an annular shape. After that, as illustrated in Fig. 7, a hook 22 of, for example, a hoist or a crane is engaged with a lifting bail 21a of the lifting tool 21 having the annular shape, and the blade unit 2 or the blade unit 2A is lifted and transported by the hoist or the crane.

To replace the deburring blade 3, first, the blade unit 2 or the blade unit 2A that is inserted in the hollow space in the blade seat support base 5 and that has been used is lifted and removed by a hoist or a crane. After that, another blade unit 2 or another blade unit 2A that is assembled in advance and stored in a storage is lifted by the hoist or the crane and conveyed to a position directly above the blade seat support base 5, and is lowered by the hoist or the crane, so that the blade unit 2 or the blade unit 2A is inserted into the hollow space in the blade seat support base 5.

A method for manufacturing cast steel parts or rolled steel parts of the present invention includes removing burrs from the cast steel part 20 formed by continuous casting or a rolled steel part formed by hot rolling by using the above-described burr removal device 1, thereby manufacturing the cast steel part 20 or the rolled steel part.

As described above, according to the present invention, the deburring blade 3 and the blade seat 4 are integrated together, and the fitting unit 9 of the blade seat 4 can be inserted into and removed from the hollow space in the blade seat support base 5. Accordingly, the deburring blade 3 and the blade seat 4 can be assembled off-line. In addition, the deburring blade 3 can be disposed at a predetermined position simply by inserting the deburring blade 3 and the blade seat 4 that are integrated together into the hollow space in the blade seat support base 5.

In addition, according to the present invention, replacement of the deburring blade 3 is completed by removing the deburring blade 3 and the blade seat 4 that are integrated together and that have been used from the hollow space in the blade seat support base 5 and then inserting another deburring blade 3 and another blade seat 4 that are assembled in advance into the hollow space in the blade seat support base 5. Thus, the deburring blade 3 can be replaced in a short time.

### EXAMPLE

The present invention was applied to a burr removal device 1 installed on a cast part conveyance line of a slab continuous casting machine that performs continuous casting to produce a slab having a width of 700 to 1600 mm and a thickness of 220 mm.

The burr removal device 1 illustrated in Fig. 1 was structured such that the diameter of the upper surface of the deburring blade 3 was 180 mm, that the inside diameter of the blade seat support base 5 (diameter of the hollow space) was 140 mm, and that the height of the blade seat support base 5 was 150 mm. This blade seat support base 5 was used together with the blade unit 2 illustrated in Fig. 3, in which the diameter of the second fitting member 11 was 133 mm (diameter of the first fitting member 10 was 90 mm), and the blade unit 2A illustrated in Fig. 5, in which the length of the major axis of the elliptical cross section of the third fitting member 12 and the length of the major axis of the elliptical cross section of the fourth fitting member 13 were 130 mm. Under these conditions, a test for removing burrs was performed. The quality of the operation of removing burrs was evaluated based on the occurrence of scabs due to burrs on a steel sheet obtained by hot rolling the slab.

As a result, both when the blade unit 2 illustrated in Fig. 3 was used and when the blade unit 2A illustrated in Fig. 5 was used, the occurrence of scabs due to burrs on the steel sheet obtained by hot rolling was similar to that when the burr removal device 1A according to the related art illustrated in Fig. 8 was used. The time required to replace the deburring blade 3 was 5 minutes, which is shorter by 40 minutes than the time required according to the related art.

### Reference Signs List

1 burr removal device
1A burr removal device disclosed in Patent Literature 1
2 blade unit
3 deburring blade
3a recess
4 blade seat
5 blade seat support base
6 arm
7 arm vibration elevation drive unit
8 base seat
9 fitting unit
10 first fitting member
11 second fitting member
12 third fitting member
13 fourth fitting member
14 fitting member
15 fitting member
16 bolt
17 bolt
18 nut
19 nut
20 cast steel part
21 lifting tool
22 hook

## Claims

1. A burr removal device (1) for removing burrs formed by fusing cast steel parts or rolled steel parts, the burr removal device (1) comprising:
a deburring blade (3) that is disc-shaped and configured to remove burrs by being vibrated along a plane in contact with a lower edge line of a fusion-cut surface of a cast steel part (20) or a rolled steel part to forcefully scrape off the burrs;
a blade seat (4) that is disposed in contact with a lower surface of the deburring blade (3) and that serves as a seat for the deburring blade (3);
a blade seat support base (5) that supports the blade seat (4);
an arm (6) having the blade seat support base (5) at a distal end thereof; and
an arm vibration elevation drive unit (7) that is configured to move the arm (6) upward and downward, cause the arm (6) to extend and contract, and vibrate the arm (6) along the plane in contact with the lower edge line of the fusion-cut surface of the cast steel part or the rolled steel part,
wherein the blade seat support base (5) has a hollow cylindrical shape, and at least a portion of the blade seat (4) has an outer dimension greater than an inside diameter of the blade seat support base (5),
wherein a lower portion of the blade seat (4) serves as a fitting unit (9) that is inserted in the hollow space in the blade seat support base (5),
wherein the blade seat (4) including the fitting unit (9) is integrated with the deburring blade by a bolt (16), (17) that extends through the blade seat (4) and the deburring blade (3) and a nut (18), (19) that is fastened to the bolt (16), (17), and
wherein the fitting unit (9) is capable of being inserted into and removed from the hollow space in the blade seat support base (5), and the deburring blade (3) is disposed at a predetermined position when the fitting unit (9) is inserted in the hollow space in the blade seat support base (5).

2. The burr removal device (1) for cast steel parts or rolled steel parts according to Claim 1,
wherein a difference between a maximum outer dimension of the fitting unit (9) and the inside diameter of the blade seat support base (5) is greater than or equal to 7 mm.

3. A method for manufacturing cast steel parts or rolled steel parts, the method comprising:
removing burrs formed by fusing from a cast steel part formed by continuous casting or from a rolled steel part formed by hot rolling by using the burr removal device for cast steel parts or rolled steel parts according to Claim 1 or 2, thereby manufacturing a cast steel part or a rolled steel part.

## Patentansprüche

1. Gratentfernungsvorrichtung (1) zum Entfernen von Graten, die durch Schmelzen von Stahlgussteilen oder gewalzten Stahlteilen gebildet werden, die Gratentfernungsvorrichtung (1) umfassend:
eine Entgratungsklinge (3), die scheibenförmig und konfiguriert ist, um Grate zu entfernen, indem sie entlang einer Ebene in Kontakt mit einer unteren Randlinie einer schmelzgeschnittenen Oberfläche eines Stahlgussteils (20) oder eines gewalzten Stahlteils in Schwingung versetzt wird, um die Grate kraftvoll abzuschaben;
einen Klingensitz (4), der in Kontakt mit einer unteren Fläche der Entgratungsklinge (3) angeordnet ist und der als Sitz für die Entgratungsklinge (3) dient;
eine Klingensitz-Trägerbasis (5), die den Klingensitz (4) trägt;
einen Arm (6), der an einem distalen Ende davon die Klingensitz-Trägerbasis (5) aufweist, und
eine Armvibrationserhöhung-Antriebseinheit (7), die konfiguriert ist, um den Arm (6) nach oben und unten zu bewegen, den Arm (6) zu veranlassen, auszufahren und einzufahren, und den Arm (6) entlang der Ebene in Kontakt mit der unteren Randlinie der schmelzgeschnittenen Oberfläche des Stahlgussteils oder des gewalzten Stahlteils vibrieren zu lassen,
wobei die Klingensitz-Trägerbasis (5) eine hohle zylindrische Form aufweist und mindestens ein Abschnitt des Klingensitzes (4) eine Außenabmessung aufweist, die größer ist als ein Innendurchmesser der Klingensitz-Trägerbasis (5),
wobei ein unterer Abschnitt des Klingensitzes (4) als eine Passeinheit (9) dient, die in den Hohlraum in der Klingensitz-Trägerbasis (5) eingesetzt wird,
wobei der Klingensitz (4) einschließlich der Passeinheit (9) mit der Entgratungsklinge durch einen Bolzen (16), (17), der sich durch den Klingensitz (4) und die Entgratungsklinge (3) erstreckt, und eine Mutter (18), (19), die an dem Bolzen (16), (17) befestigt ist, integriert ist, und
wobei die Passeinheit (9) in den Hohlraum in der Klingensitz-Trägerbasis (5) eingesetzt und daraus entfernt werden kann und die Entgratungsklinge (3) an einer vorbestimmten Position angeordnet ist, wenn die Passeinheit (9) in den Hohlraum in der Klingensitz-Trägerbasis (5) eingesetzt ist.

2. Entgratungsvorrichtung (1) für Stahlgussteile oder Walzstahlteile gemäß Anspruch 1, wobei eine Differenz zwischen einer maximalen Außenabmessung der Passeinheit (9) und dem Innendurchmesser der Klingensitz-Trägerbasis (5) größer als oder gleich wie 7 mm ist.

3. Verfahren zum Herstellen von Stahlgussteilen oder gewalzten Stahlteilen, das Verfahren umfassend:
Entfernen von durch Schmelzen gebildeten Graten von einem durch Stranggießen geformten Stahlgussteil oder von einem durch Warmwalzen geformten Stahlwalzteil unter Verwendung der Gratentfernungsvorrichtung für Stahlgussteile oder gewalzte Stahlteile gemäß Anspruch 1 oder 2, wodurch ein Stahlgussteil oder ein gewalztes Stahlteil hergestellt wird.

## Revendications

1. Un dispositif d'élimination des bavures (1) pour éliminer les bavures formées par la fusion de pièces en acier moulé ou de pièces en acier laminé, le dispositif d'élimination des bavures (1) comprenant :
une lame d'ébavurage (3) en forme de disque et configurée pour éliminer les bavures en étant vibrée le long d'un plan en contact avec une ligne de bord inférieure d'une surface découpée par fusion d'une pièce en acier moulé (20) ou d'une pièce en acier laminé afin de gratter avec force les bavures ;
un siège de lame (4) qui est disposé en contact avec une surface inférieure de la lame d'ébavurage (3) et qui sert de siège à la lame d'ébavurage (3) ;
une base de support du siège de la lame (5) qui soutient le siège de la lame (4) ;
un bras (6) ayant la base de support du siège de la lame (5) à son extrémité distale ; et
une unité d'entraînement d'élévation de vibration du bras (7) qui est configurée pour déplacer le bras (6) vers le haut et vers le bas, provoquer l'extension et la contraction du bras (6) et faire vibrer le bras (6) le long du plan en contact avec la ligne du bord inférieure de la surface découpée par fusion de la pièce en acier moulé ou de la pièce en acier laminé,
dans lequel la base de support du siège de la lame (5) a une forme cylindrique creuse, et au moins une partie du siège de la lame (4) a une dimension extérieure supérieure au diamètre intérieur de la base de support du siège de la lame (5),
dans lequel une partie inférieure du siège de la lame (4) sert d'unité de raccord (9) qui est insérée dans l'espace creux de la base de support du siège de la lame (5),
dans lequel le siège de la lame (4), y compris l'unité de raccord (9), est intégré à la lame d'ébavurage par un boulon (16), (17) qui s'étend à travers le siège de la lame (4) et la lame d'ébavurage (3), et un écrou (18), (19) qui est fixé au boulon (16), (17), et
dans lequel l'unité de raccord (9) peut être insérée et retirée de l'espace creux de la base de support du siège de la lame (5), et la lame d'ébavurage (3) est disposée à une position prédéterminée lorsque l'unité de raccord (9) est insérée dans l'espace creux de la base de support du siège de la lame (5).

2. Un dispositif d'élimination des bavures (1) pour pièces en acier moulé ou pièces en acier laminé selon la revendication 1,
dans lequel la différence entre une dimension extérieure maximale de l'unité de raccord (9) et le diamètre intérieur de la base de support du siège de la lame (5) est supérieure ou égale à 7 mm.

3. Un procédé de fabrication de pièces en acier moulé ou de pièces en acier laminé, le procédé comprenant :
l'élimination des bavures formées par fusion d'une pièce en acier moulé formée par coulée continue ou d'une pièce en acier laminé formée par laminage à chaud en utilisant le dispositif d'élimination des bavures pour pièces en acier moulé ou pour pièces en acier laminé selon la revendication 1 ou 2, ce qui permet de fabriquer une pièce en acier moulé ou une pièce en acier laminé.
